# EUROPÄISCHE PATENTSCHRIFT

(11) **EP 4 422 891 B1**
(45) Veröffentlichungstag und Bekanntmachung des Hinweises auf die Patenterteilung: **12.08.2026**
(21) Anmeldenummer: 22785743.0
(22) Anmeldetag: 23.09.2022
(51) Int. Cl.: B60G 17/015

(54) **VERFAHREN ZUR ERMITTLUNG DER RAD- ODER ACHSLAST EINES LUFTGEFEDERTEN FAHRZEUGS**
METHOD FOR DETERMINING THE WHEEL LOAD OR AXLE LOAD OF AN AIR-SPRUNG VEHICLE
PROCÉDÉ DE DÉTERMINATION DE LA CHARGE DE ROUE OU DE LA CHARGE D'ESSIEU D'UN VÉHICULE À RESSORT PNEUMATIQUE

(30) Priorität: 25.10.2021 DE 102021127655
(43) Veröffentlichungstag der Anmeldung: 04.09.2024
(73) Patentinhaber: ZF CV Systems Europe BV, 1170 Brüssel (BE)
(72) Erfinder: DIET, Felix, 31552 Rodenberg (DE); RIEDEL-KUJAS, Wolfgang Uwe, 31637 Rodewald (DE); SCHRADER, Christian, 31228 Peine (DE); STENDER, Axel, 31787 Hameln (DE)
(74) Vertreter: Ohlendorf, Henrike
(86) Internationale Anmeldenummer: PCT/EP2022/076569
(87) Internationale Veröffentlichungsnummer: WO 2023/072498

(56) Entgegenhaltungen:
- WO-A1-2019/120652
- DE-A1- 102017 008 973

## Beschreibung

Die Erfindung betrifft ein Verfahren zur Ermittlung der Rad- oder Achslast eines luftgefederten Fahrzeugs durch Messung des Innendrucks mindestens eines Luftfederbalgs, wobei die Rad- oder Achslast anhand einer Druckkennlinie ermittelt wird, welche das Verhältnis zwischen einer auf den Luftfederbalg wirkenden Auflagerkraft und einem Balginnendruck des Luftfederbalgs darstellt.

Lkw oder auch Nutzfahrzeuganhänger mit konventioneller oder elektronischer Luftfederung weisen Luftfederbälge auf, die als Federungselemente zur Federung der Achsen oder Räder im Fahrwerk angeordnet sind. Dabei können ein oder mehrere Luftfederbälge auf jeder Seite der Achse vorgesehen sein.

Die Luftfederbälge bestehen aus elastomerem Material, im Wesentlichen aus Gummi, welches aus unterschiedlichen Materiallagen zusammengesetzt sein kann und üblicherweise eingebettete Festigkeitsträger aufweist. Die Luftfederbälge unterliegen wie die meisten künstlichen Werkstoffe einer Alterung, die durch äußere Einflüsse, wie direkte Sonneneinstrahlung, Ozon, Wärme durch die Nähe des Motors oder der Abgasanlage, auch durch Reinigungs- oder Schmiermittel beeinflusst sein kann.

Durch die ständige Innendruckbelastung kann bei fortschreitender Alterung eine Veränderung der Luftfederbälge sich dadurch zeigen, dass etwa deren wirksame Fläche bzw. deren wirksamer Durchmesser sich über die Lebensdauer ändert. Eine solche Änderung hat natürlich Auswirkungen auf eine Ermittlung der Rad- oder Achslasten, wenn diese Ermittlung über die Druckkennlinie des Luftfederbalgs erfolgt. Bei einem durch Alterung sich vergrößernden wirksamen Durchmesser ergeben sich dann bei einer gleichen Achslast niedrigere Druckwerte. Das heißt im Umkehrschluss, dass bei einer Ermittlung der Achslast allein über den Balginnendruck bzw. Systemdruck in der Luftfeder im Laufe der Zeit und nach einer entsprechenden Alterung bei gleichem Druckwert eine entsprechend höhere Radlast oder Achslast vorhanden sein kann.

Bereits heute und zunehmend in näherer Zukunft existieren gesetzliche Regelungen, die vorschreiben, dass eine Messung der Rad- oder Achslast zu jedem Zeitpunkt möglich sein und kontrolliert werden können muss. So enthält zum Beispiel die kommende Durchführungsverordnung EU 2019/1213 der Europäischen Kommission Regelungen und Bedingungen für bordeigene Mess- und Wiegesysteme, die u.a. dafür sorgen sollen, dass bei einer Messung über den Balginnendruck eines Luftfederbalgs einerseits eine hinreichende Genauigkeit erreicht wird und andererseits eine solche Messung auch über die Laufzeit valide Ergebnisse liefern muss.

Um nun der Alterung von Luftfederbälgen in Luftfederungssystemen Rechnung zu tragen, ist es bereits heute üblich, dass eine regelmäßige Kalibrierung durchgeführt wird, um für die Luftfederbälge eine jeweils aktuelle Druckkennlinie zu ermitteln, die der Veränderung der Bälge durch Alterung entspricht. Der kalibrierte Wert wird den entsprechenden Einrichtungen übermittelt und auch in Anzeigeeinrichtungen oder Telematiksysteme übertragen.

Allerdings ist eine Kalibrierung der Druckkennlinie bzw. Achslastkennlinie unter den heute noch vielfach üblichen Bedingungen eine relativ aufwendige Angelegenheit. Die Kalibrierung erfolgt nämlich in regelmäßigen Abständen dadurch, dass gewichtsabhängige Messungen durchgeführt werden, nämlich Messungen an einem unbeladenen, einem teilbeladenen und einem beladenen Fahrzeug. Danach wird die so ermittelte und im Wesentlichen durch diese drei Mess-Punkte bestimmte Kennlinie in einem Steuergerät abgelegt. Im Laufe der Lebensdauer muss eine solche Kalibrierung also mehrfach durchgeführt werden.

Nachteilig ist bei solchen Kalibrierung in drei verschiedenen Beladungszuständen, dass eine Wiegevorrichtung benötigt wird und der Beladungszustand während der Kalibrierung mindestens dreimal geändert werden muss. Alternativ kann zwar die Kalibrierung auf verschiedene Zeitpunkte verteilt werden, an denen eine - zufällige - passende Beladung vorhanden ist, eine solche Kalibrierung ist aber sehr zeitaufwendig und setzt zudem erfahrenes Bedienpersonal und entsprechende stationäre Einrichtungen voraus.

Im Stand der Technik sind allerdings bereits Verfahren bekannt, bei denen eine solche Kalibrierung durch eine automatisierte Anpassung ersetzt wird, nämlich Verfahren zur automatisierten Ermittlung der auf Luftfedern wirkenden Last, die die Alterung der Federungsmittel, d.h. der Luftfederbälge in Betracht ziehen.

So offenbart etwa die DE 10 2017 008 973 A1 ein Verfahren zur Lastbestimmung eines Fahrzeugs mit einem Luftfederungssystem, wobei die Bestimmung der Last auf Basis des Drucks in den Federungsmitteln und der Alterung der Federungsmittel erfolgt. Dabei wird vorher der Einfluss der Alterung der Federungsmittel dadurch bestimmt, dass z.B. Beladungszyklen oder Vibrationen während des Betriebes gesammelt und deren Einfluss auf die Alterung bestimmt werden, oder dadurch, dass auf der Basis von Temperaturverläufen oder der Häufigkeit von Karosserieabsenkungen und -anhebungen auf die Alterung der Federungsmittel geschlossen wird.

Die Modelle, die einem solchen Verfahren eigen sind, erfordern nicht nur erheblichen Rechenaufwand, sondern berücksichtigen zudem "externe" Größen und Lastkollektive von vielen Aggregaten und Einrichtungen des gesamten Fahrzeugs, die auch von der jeweiligen Brutto-Masse der Ladung und des Fahrzeugs beeinflusst sind. In diese Modelle gehen also viele Parameter ein, die Auswirkungen der Alterung von außerhalb der direkt zum Luftfederbalg oder Luftfederumgebung gehörigen Mittel/Gegenstände beschreiben, so dass grundsätzlich für jedes Fahrzeug eine Vielzahl unterschiedlicher spezifischer Parameter zugrunde zu legen ist. Eine einfache und generelle Anwendbarkeit des Verfahrens für verschiedene Fahrzeuge und Fahrzeugtypen wird dadurch erschwert.

Die Aufgabe der vorliegenden Erfindung bestand demnach in der Bereitstellung eines verbesserten und vereinfachten Verfahrens zur Bestimmung der Radlast oder Achslast bei luftgefederten Fahrzeugen, welches für unterschiedliche Fahrzeuge, Belastungen und Anwendungsbereiche eine sichere, schnelle und einfach zu automatisierende Erkennung der Radlasten und Achslasten bereitstellt, insbesondere eine den gesetzlichen Vorschriften entsprechende Bestimmung der Rad- und Achslasten für Lkw und Nutzfahrzeuganhänger.

Gelöst wird diese Aufgabe durch die Merkmale des Hauptanspruchs. Weitere vorteilhafte Ausbildungen sind in den abhängigen Ansprüchen offenbart.

Dabei erfolgen ausgehend von einer durch Druckmessung ermittelten Rad- oder Achslast eines luftgefederten Fahrzeugs, insbesondere eines luftfederten Nutzfahrzeugs, beispielsweise einer Zugmaschine oder eines Nutzfahrzeuganhängers, anhand einer ursprünglichen Druckkennlinie eines neu in Betrieb genommenen Luftfederbalgs weitere Druckmessungen anhand von Druckkennlinien, die im Vergleich zur ursprünglichen Druckkennlinie eine die Alterung des Luftfederbalgs berücksichtigende Änderung aufweisen. Soweit hier kurz von "Druckmessungen" die Rede ist, soll damit die Messung des Innendrucks eines Luftfederbalgs oder, soweit durch die vorgegebene Konstruktion der Luftfederanlage identisch, der Systemdruck in der Luftfederung umfasst sein.

Durch solche Druckkennlinien, welche die aufgrund von vorlaufenden Erfahrungen, Versuchen und Messungen ermittelten Änderungen über die Betriebszeit bereits umfassen, erspart man sich wiederholende, aufwändige Kalibrierungen und das immer wieder neue Ermitteln der gerade aktuell verwendbaren Druckkennlinie. Die Ausbildung solcher Druckkennlinien, die durch Alterung induzierte Änderungen berücksichtigen, kann beispielsweise aus Daten/Erfahrungswerten von vorlaufenden Kalibrierungsreihen gleicher Luftfederbälge hervorgehen oder auch die Ergebnisse künstlicher Alterung durch Laborversuche und/oder die Ergebnisse von Modellrechnungen widerspiegeln.

Eine Weiterbildung besteht darin, dass die die Alterung der Luftfederbälge berücksichtigende Änderung als ein die Alterung kompensierender Versatz der Druckkennlinie ausgebildet ist. Dies erlaubt eine ausreichend genaue Messung der Rad- und/oder Achslasten über die Laufzeit eines Luftfederbalgs.

Eine Weiterbildung besteht darin, dass die eine Änderung aufweisenden Druckkennlinien die Durchmesserveränderung des Luftfederbalgs über dessen Betriebszeit berücksichtigen. Eine solche Durchmesserveränderung spiegelt in ausreichender Weise alle Alterungsprozesse in dem Luftfederbalg wider, nämlich Alterungsprozesse innerhalb der Materiallagen und auch Alterungsprozesse innerhalb der Festigkeitsträger. Somit erhält man einen sehr einfach zu ermittelnden Indikator für den Einfluss der Balg-Alterung insgesamt auf die Druckkennlinie.

Eine weitere Ausbildung besteht darin, dass die Ermittlung der Rad- oder Achslast anhand von eine Änderung aufweisenden Druckkennlinien in zeitlichen oder ereignisbezogenen Abständen erfolgt, beispielsweise nach Ablauf vorgegebener Zeiträume, nach Erreichen vorgegebener Laufzeiten des Fahrzeugs oder nach vorgegeben Ereignissen. Hierbei sind vorgegebene Zeiträume oder vorgegebene Laufzeiten selbsterklärend und/oder richten sich nach den entsprechenden gesetzlichen Vorgaben. Vorgegebene Ereignisse können zum Beispiel einen Austausch von Luftfederbälgen im Rahmen regelmäßiger Instandhaltung oder nach Schäden oder Unfällen beinhalten.

Eine weitere Ausbildung besteht darin, dass die Ermittlung der Rad- oder Achslast anhand von eine Änderung aufweisenden Druckkennlinien kontinuierlich erfolgt. Dabei können beispielsweise zeitaktuell inkremental veränderte Druckkennlinien den jeweiligen Messungen zugrunde gelegt werden.

Eine weitere Ausbildung besteht darin, dass die Ermittlung der Rad- oder Achslast durch einen in einer elektronischen Steuerungseinrichtung der Luftfederung des Fahrzeugs hinterlegten Algorithmus erfolgt und der Algorithmus auf Signale von mit der Steuerungseinrichtung zusammenwirkenden Sensoren reagiert und/oder auf Inhalte von in der Steuerungseinrichtung vorhandenen Speichern zugreift, die Daten zur Beschreibung des Verlaufs der geänderten Druckkennlinien, Rechenvorschriften zur Ermittlung der Rad- oder Achslast sowie vorgegebene Daten über die Zeiträume, Laufzeiten oder Ereignisse beinhalten. Durch eine solche Ausbildung wird das erfindungsgemäße Verfahren Bestandteil einer regelmäßigen elektronischen Routine im Fahrzeug, welche durch die Steuerungseinrichtung bzw. den dort hinterlegten Algorithmus zeitaktuell durchgeführt werden kann und auch jederzeit abrufbar ist.

Ein Betreiber des Fahrzeugs, in dem das erfindungsgemäße Verfahren zur Anwendung kommt, erspart es sich also, eine regelmäßige Wiederholung einer zeitaufwendigen Kalibrierung durchzuführen. Die Achslast wird automatisch kompensiert und es entsteht kein zusätzlicher Aufwand.

Eine weitere, nicht erfindungsgemäße Ausbildung besteht darin, dass abhängig von einer Laufleistung des Fahrzeugs die eine Änderung aufweisende Druckkennlinie so ausgebildet ist, dass im Vergleich zu einem neu in Betrieb genommenen Luftfederbalg bei gleichem Balginnendruck eine um mindestens 2 % höhere Rad- oder Achslast ermittelt wird.

Durch eine solche Ausbildung des Verfahrens greift man quasi zurück auf eine produktabhängige Konstante, mit der es möglich ist, die unterschiedlichen Herstellungsmethoden oder Bauarten/Konstruktionen von Luftfederbälgen in ausreichender Näherung zu berücksichtigen. So kann man herstellerspezifische oder herstellungsspezifische Konstanten einführen, etwa in der Art, dass bei einer bestimmten Bauart oder einem bestimmten Luftfedertyp eine bestimmte Konstante festgelegt wird. Aus den bisherigen Erfahrungen hat sich gezeigt, dass eine Konstante, die bei gleichem Luftfederinnendruck eine um mindestens 2 % höhere Rad- oder Achslast aus der (geänderten) Druckkennlinie ausgibt, den meisten dieser unterschiedlichen Konstruktionen oder Typen von Luftfedern Rechnung trägt.

Dasselbe gilt für eine weitere erste erfindungsgemäße Ausbildung, die darin besteht, dass abhängig von der Laufleistung des Fahrzeugs die eine Änderung aufweisende Druckkennlinie stufenweise so verändert wird, dass im Vergleich zu einem neu in Betrieb genommenen Luftfederbalg bei gleichem Balginnendruck eine höhere Rad- oder Achslast in folgender Weise ermittelt wird:
nach 25.000 km eine um mindestens 0,5 % höhere Rad- oder Achslast,
nach 50.000 km eine um mindestens 0,9 % höhere Rad- oder Achslast,
nach 75.000 km eine um mindestens 1,2 % höhere Rad- oder Achslast, und
nach 100.000 km eine um mindestens 1,4 % höhere Rad- oder Achslast.

Durch eine solche stufenweise Ausbildung lassen sich die im Wesentlichen vorhandenen Einflussgrößen auf die Alterung, so auch ein vorhandenes Lastprofil bzw. die im Lauf der Zeit auf den Balg wirkende Masse bzw. die Ausnutzung der Balgtraglasten gut abbilden und durch eine geänderte Druckkennlinie darstellen. Natürlich kann eine solche zumindest stufenweise lineare Druckkennlinie auch ersetzt werden durch eine mit einer entsprechenden Kurvenfunktion zu beschreibende Druckkennlinie.

Eine weitere zweite erfindungsgemäße Ausbildung besteht darin, dass abhängig von der Lebensdauer eines Luftfederbalgs die eine Änderung aufweisende Druckkennlinie jeden Monat so verändert wird, dass im Vergleich zu einer neu in Betrieb genommenen Luftfeder bei gleichem Luftfederinnendruck eine um 0,5 % höhere Rad- oder Achslast ermittelt wird. Dies stellt eine sehr einfache und über eine große Anzahl von Luftfederbälgen gemittelte Anpassung bzw. Änderung der Druckkennlinie dar und kann sozusagen bei fehlender weiterer Spezifizierung als monatliche Grundkennlinienänderung verwendet werden.

Natürlich können auch andere Alterungserscheinungen innerhalb des Fahrwerks Auswirkungen auf die Kennlinien haben. Je nach Konstruktion könnten dabei etwa Lagerhülsen oder Gummilager über die Einsatzzeit Einfluss auf Lastmessungen haben. Auch wenn solche Einflüsse nach bisheriger Einschätzung vernachlässigbar gegenüber der Veränderung des wirksamen Durchmessers eines Luftfederbalgs im Laufe seiner Betriebszeit sind, so können die Kennlinien bei entsprechender Auslegung und Verwertung von Ergebnissen vorlaufender Versuche durchaus auch diese Einflüsse abbilden, allerdings auf Kosten der Vergleichbarkeit bei unterschiedlicher Fahrwerkskonstruktionen. Da der Einfluss sehr gering ist, ist es für das verbesserte erfindungsgemäße Verfahren völlig ausreichend, die Kennlinienänderung durch die Alterung des Luftfederbalgs zu berücksichtigen.

In besonderer Weise eignet sich natürlich die Anwendung des erfindungsgemäßen Verfahrens innerhalb einer Niveauregeleinrichtung eines luftgefederten Fahrzeugs, insbesondere eines luftgefederten Nutzfahrzeugs, insbesondere eines luftgefederten Lkw oder Lkw-Hängers, mit einer einen Algorithmus zur Durchführung des Verfahrens aufweisenden Steuerungseinrichtung. Solche Niveaueinrichtungen sind insbesondere geeignet für Lkw oder Lkw-Hänger, die in Zukunft noch mehr als heute den entsprechenden Regularien und Gesetzesvorschriften genügen müssen.

Anhand eines Ausführungsbeispiels soll die Erfindung näher erläutert werden. Es zeigen
- Fig. 1: beispielhaft ein Diagramm mit einer Druckkennlinie für einen Luftfederbalg,
- Fig. 2: Druckkennlinien zur Ermittlung der Rad- oder Achslast eines luftgefederten Fahrzeugs, die zur Ausführung des erfindungsgemäßen Verfahrens zugrunde gelegt werden.

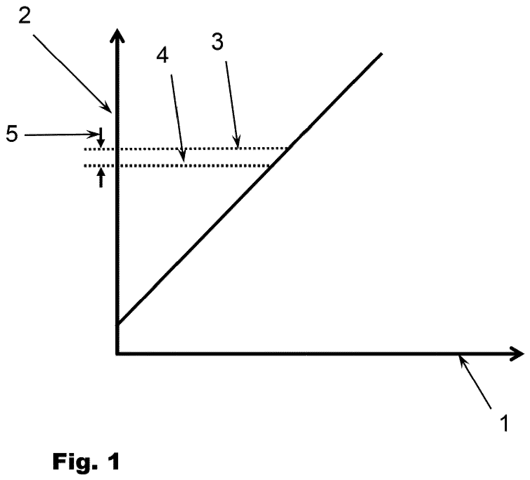

Die Fig. 1 zeigt rein beispielhaft ein Diagramm mit einer Druckkennlinie für einen Luftfederbalg, bei der ein Balginnendruck 1 auf der Abzisse und eine zugehörige, senkrecht auf den Luftfederbalg wirkende Last 2 auf der Ordinate aufgetragen ist. Diesem Verhältnis zwischen Balginnendruck 1 und axial wirkender Last 2 liegt nach der Beziehung $P = \frac{F}{Aw}$ die durch den wirksamen Durchmesser des Balgs bestimmte wirksame Fläche A_{w} des Luftfederbalgs als Parameter zugrunde. Nach einer Alterung und einer Materialermüdung des Luftfederbalgs ist der wirksame Durchmesser und damit die wirksame Fläche vergrößert, so dass eine geänderte Kennlinie maßgeblich wäre, der dann die durch den vergrößerten wirksamen Durchmesser berechnete vergrößerte wirksame Fläche zugrunde zu legen wäre.

Ginge man also bei einer Bestimmung der Auflagerlast über den Balginnendruck immer von der ursprünglichen Druckkennlinie aus, so entspräche also ein gleicher Innendruck des Luftfederbalgs tatsächlich nach einer gewissen Alterung einer höheren Belastung der Luftfeder, was dann dazu führen würde, dass für die Rad- oder Achslast falsche Werte gemessen und ausgewiesen würden.

Fig. 1 zeigt skizzenhaft und in beispielhafter Weise, wie sich ein gemessener Wert der Last 2 nach unten verschiebt, während der Luftfederbalg altert. Mit gestrichelten Linien beispielhaft dargestellt sind ein Achslastwert für einen neuen Luftfederbalg 3 und ein Achslastwert für einen gealterten Luftfederbalg 4 unter ansonsten gleichen Bedingungen. Zwischen dem Achslastwert für den neue Luftfederbalg 3 und dem Achslastwert für den gealterten Luftfederbalg 4 ist ein (negativer) Achslastversatz 5 gebildet.

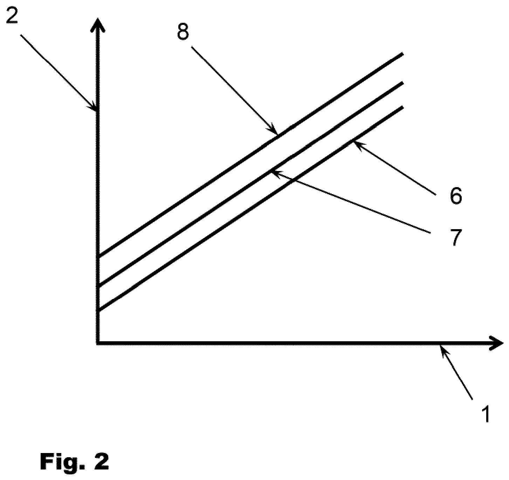

Fig.2 illustriert eine Ausführung des erfindungsgemäßen Verfahrens, bei dem Druckkennlinien 6, 7 und 8 der Ermittlung der Rad- oder Achslast eines luftgefederten Fahrzeugs zugrunde gelegt werden. Bei dieser Ausführung ist die die Alterung des Luftfederbalgs und/oder der Achslagerungen oder -aufhängungen berücksichtigende Änderung als ein die Alterung kompensierender Versatz (Offset) der Druckkennlinien ausgebildet.

In der Fig. 2 stellt die Druckkennlinie 6 die ursprüngliche Druckkennlinie im Neuzustand des Luftfederbalgs dar. Die Druckkennlinien 7 und 8 sind dabei jeweils so ausgebildet, dass abhängig von der Laufleistung des Fahrzeugs im Vergleich zu einem neu in Betrieb genommenen Luftfederbalg mit der Druckkennlinie 6 bei gleichem Luftfederinnendruck eine um jeweils mindestens 2 % höhere Rad- oder Achslast ermittelbar ist. Die Druckkennlinien 6 und 7 stellen dabei geänderte Kennlinien dar, die nach 25.000 km und 50.000 km Laufleistung des Fahrzeugs zu berücksichtigen sind.

Dem Ausführungsbeispiel nach Fig. 2 liegen folgende Werte zugrunde:
Ein unbeladenes Fahrzeug besitzt die Masse von 4500 kg, wodurch bei einem neuen Luftfederbalg der gemäß der Druckkennlinie 6 ohne Beladung gemessene Balginnendruck 0,5 bar beträgt. Belädt man dieses Fahrzeugs nun mit einer Masse von 22500 kg, so ergibt sich eine Gesamtmasse von 27000 kg und ein Balginnendruck in dem neuen Luftfederbalg von 6,5 bar.

Nach einer Laufleistung des Fahrzeugs von 25.000 km wird für weitere Messungen zunächst die Druckkennlinie 7 zugrunde gelegt, die bei gleicher Steigung gegenüber der Druckkennlinie 6 so versetzt ist, dass bei gleichem Balginnendruck eine um jeweils mindestens 2 % höhere Auflast, d.h. Rad- oder Achslast ermittelt wird.

Misst man nun unter Berücksichtigung der Druckkennlinie 7 den Innendruck im Luftfederbalg, so entspricht ein Balginnendruck von 6,5 bar im beladenen Zustand nicht mehr einer Masse von 27000 kg, sondern bereits einer auf den Balg lastenden Masse von 27540 kg, also etwa einer um eine halbe Tonne höheren Belastung. Da sich das Fahrzeuggewicht und die Masse der Ladung üblicherweise auf mehrere Luftfedern verteilt, kann eine solche Steigerung durchaus aus dem erlaubten Toleranzbereich fallen und bei einer Fahrzeugkontrolle entsprechende Maßnahmen auslösen. Würde man sich hier nur auf die ursprüngliche Druckkennlinie eines neuen Luftfederbalgs verlassen, so hätte dies erhebliche Fehlmessungen zufolge.

Nach einer Laufleistung des Fahrzeugs von 50.000 km wird für dann folgende Messungen zunächst die Druckkennlinie 8 zugrunde gelegt, die bei gleicher Steigung gegenüber der Druckkennlinie 6 so versetzt ist, dass bei gleichem Balginnendruck/Luftfederinnendruck eine um jeweils mindestens 4 % höhere Rad- oder Achslast ermittelt wird.

Abgesehen von diesem Ausführungsbeispiel können die Änderungen der Kennlinien auch in Form von geänderten Steigungen, durch Kombinationen von Steigungen und Versatz oder in Form von Kurvenfunktion empirisch festgelegt werden.

### Bezugszeichenliste (Teil der Beschreibung)

- 1: Balginnendruck
- 2: Last
- 3: Achslastwert für einen neuen Luftfederbalg
- 4: Achslastwert für einen gealterten Luftfederbalg
- 5: Achslastversatz
- 6: Druckkennlinie eines Luftfederbalgs im Neuzustand
- 7: Druckkennlinie eines Luftfederbalgs nach 25000 km Laufleistung
- 8: Druckkennlinie eines Luftfederbalgs nach 50000 km Laufleistung

## Patentansprüche

1. Verfahren zur Ermittlung der Rad- oder Achslast eines luftgefederten Fahrzeugs, insbesondere eines luftgefederten Nutzfahrzeugs, durch Messung des Innendrucks mindestens eines Luftfederbalgs, wobei die Rad- oder Achslast anhand einer Druckkennlinie (1, 2, 3) ermittelt wird, welche das Verhältnis zwischen einer auf den Luftfederbalg wirkenden Auflagerkraft und einem Balginnendruck des Luftfederbalgs darstellt, **dadurch gekennzeichnet, dass** ausgehend von einer durch Druckmessung ermittelten Rad- oder Achslast anhand einer ursprünglichen Druckkennlinie (1) eines neu in Betrieb genommenen Luftfederbalgs weitere Druckmessungen zur Ermittlung der Rad- oder Achslast anhand von Druckkennlinien (2, 3) erfolgen, die im Vergleich zur ursprünglichen Druckkennlinie eine die Alterung des Luftfederbalgs berücksichtigende Änderung aufweisen,
**dadurch gekennzeichnet, dass** abhängig von der Laufleistung des Fahrzeugs die eine Änderung aufweisende Druckkennlinie stufenweise so verändert wird, dass im Vergleich zu einem neu in Betrieb genommenen Luftfederbalg bei gleichem Balginnendruck eine höhere Rad- oder Achslast in folgender Weise ermittelt wird:
- nach 25.000 km eine um mindestens 0,5 % höhere Rad- oder Achslast,
- nach 50.000 km eine um mindestens 0,9 % höhere Rad- oder Achslast,
- nach 75.000 km eine um mindestens 1,2 % höhere Rad- oder Achslast, und
- nach 100.000 km eine um mindestens 1,4 % höhere Rad- oder Achslast oder abhängig von der Lebensdauer einer Luftfeder die eine Änderung aufweisende Druckkennlinie jeden Monat so verändert wird, dass im Vergleich zu einem neu in Betrieb genommenen Luftfederbalg bei gleichem Balginnendruck eine um 0,5 % höhere Rad- oder Achslast ermittelt wird.

2. Verfahren nach Anspruch 1, bei dem die die Alterung des Luftfederbalgs berücksichtigende Änderung als ein die Alterung kompensierender Versatz der Druckkennlinie (2, 3) ausgebildet ist.

3. Verfahren nach Anspruch 1 oder 2, bei dem die eine Änderung aufweisenden Druckkennlinien (2, 3) die Durchmesserveränderung des Luftfederbalgs über dessen Betriebszeit berücksichtigen.

4. Verfahren nach einem der Ansprüche 1 bis 3, bei dem die Ermittlung der Rad- oder Achslast anhand von eine Änderung aufweisenden Druckkennlinien (2, 3) in zeitlichen oder ereignisbezogenen Abständen erfolgt, insbesondere nach Ablauf vorgegebener Zeiträume, nach Erreichen vorgegebener Laufzeiten des Fahrzeugs oder nach vorgegeben Ereignissen.

5. Verfahren nach einem der Ansprüche 1 bis 3, bei dem die Ermittlung der Rad- oder Achslast anhand von eine Änderung aufweisenden Druckkennlinien kontinuierlich erfolgt.

6. Verfahren nach einem der Ansprüche 1 bis 5, bei dem die Ermittlung der Rad- oder Achslast durch einen in einer elektronischen Steuerungseinrichtung der Luftfederung des Fahrzeugs hinterlegten Algorithmus erfolgt und der Algorithmus auf Signale von mit der Steuerungseinrichtung zusammenwirkenden Sensoren reagiert und/oder auf Inhalte von in der Steuerungseinrichtung vorhandenen Speichern zugreift, die Daten zur Beschreibung eines Verlaufs der geänderten Druckkennlinien, Rechenvorschriften zur Ermittlung der Rad- oder Achslast sowie vorgegebene Daten über die Zeiträume, Laufzeiten oder Ereignisse beinhalten.

7. Luftgefedertes Fahrzeug, insbesondere Nutzfahrzeug, insbesondere Lkw oder Lkw-Hänger, mit einer Niveauregeleinrichtung, die eine einen Algorithmus zur Durchführung eines Verfahrens nach Anspruch 1 bis 6 aufweisende Steuerungseinrichtung aufweist.

## Claims

1. Method for determining the wheel or axle load of an air-suspended vehicle, in particular an air-suspended commercial vehicle, by measuring the internal pressure of at least one air bellows, the wheel or axle load being determined on the basis of a pressure characteristic curve (1, 2, 3) which represents the ratio between a supporting force acting on the air bellows and an internal pressure of the air bellows, **characterized in that** starting from a wheel or axle load determined by pressure measurement using an original pressure characteristic curve (1) of a newly commissioned air bellows, further pressure measurements are carried out to determine the wheel or axle load using pressure characteristic curves (2, 3) which, compared to the original pressure characteristic curve, show a change that takes into account the aging of the air bellows,
**characterized in that** depending on the mileage of the vehicle, the pressure characteristic curve which shows a change is gradually modified so that, compared to a newly commissioned air bellows, a higher wheel or axle load is determined at the same internal bellows pressure in the following manner:
- after 25,000 km, a wheel or axle load that is higher by at least 0.5%,
- after 50,000 km, a wheel or axle load that is higher by at least 0.9%,
- after 75,000 km, a wheel or axle load that is higher by at least 1.2%, and
- after 100,000 km, a wheel or axle load that is higher by at least 1.4% or, depending on the service life of an air spring, the pressure characteristic curve which shows a change is modified every month so that, compared to a newly commissioned air bellows at the same internal bellows pressure, a wheel or axle load that is 0.5% higher is determined.

2. Method according to claim 1, in which the change that takes into account the aging of the air bellows is designed as an offset of the pressure characteristic curve (2, 3) that compensates for the aging.

3. Method according to claim 1 or 2, in which the pressure characteristic curves (2, 3) which show a change take into account the diameter change of the air bellows over its operating time.

4. Method according to any of claims 1 to 3, in which the wheel or axle load is determined at time or event-related intervals on the basis of pressure characteristic curves (2, 3) which show a change, in particular after the expiry of predetermined time periods, after predetermined running times of the vehicle are reached or after predetermined events.

5. Method according to any of claims 1 to 3, in which the wheel or axle load is determined continuously on the basis of pressure characteristic curves which show a change.

6. Method according to any of claims 1 to 5, in which the wheel or axle load is determined by an algorithm stored in an electronic control device of the air suspension of the vehicle and the algorithm reacts to signals from sensors cooperating with the control device and/or accesses contents of memories which are located in the control device and contain data to describe a course of the changed pressure characteristic curves, calculation rules for determining the wheel or axle load and predetermined data regarding the time periods, running times or events.

7. Air-suspended vehicle, in particular a commercial vehicle, in particular a truck or truck trailer, having a level-control device comprising a control device having an algorithm for carrying out a method according to claims 1 to 6.

## Revendications

1. Procédé pour la détermination de la charge de roue ou par essieu d'un véhicule à suspension pneumatique, en particulier d'un véhicule utilitaire à suspension pneumatique, par une mesure de la pression intérieure d'au moins un soufflet de suspension pneumatique, dans lequel la charge de roue ou par essieu est déterminée à l'aide d'une courbe caractéristique de pression (1, 2, 3) qui représente le rapport entre une force d'appui agissant sur le soufflet de suspension pneumatique et une pression intérieure de soufflet du soufflet de suspension pneumatique, **caractérisé en ce que,** en partant d'une charge de roue ou par essieu déterminée par mesure de pression à l'aide d'une courbe caractéristique de pression initiale (1) d'un soufflet de suspension pneumatique nouvellement en fonctionnement, d'autres mesures de pression sont effectuées pour la détermination de la charge de roue ou par essieu à l'aide de courbes caractéristiques de pression (2, 3) qui présentent, par rapport à la courbe caractéristique de pression initiale, une modification prenant en compte le vieillissement du soufflet de suspension pneumatique,
**caractérisé en ce que,** en fonction du kilométrage du véhicule, la courbe caractéristique de pression présentant une modification est modifiée par étapes de sorte que, par rapport à un soufflet de suspension pneumatique nouvellement en fonctionnement, une charge de roue ou par essieu plus élevée est déterminée de la manière suivante pour une pression intérieure de soufflet identique :
- après 25 000 km, une charge de roue ou par essieu supérieure d'au moins 0,5 %,
- après 50 000 km, une charge de roue ou par essieu supérieure d'au moins 0,9 %,
- après 75 000 km, une charge de roue ou par essieu supérieure d'au moins 1,2 %, et
- après 100 000 km, une charge de roue ou par essieu supérieure d'au moins 1,4 % ou, en fonction de la durée de vie d'une suspension pneumatique, la courbe caractéristique de pression présentant une modification est modifiée chaque mois de sorte que, par rapport à un soufflet de suspension pneumatique nouvellement en fonctionnement, une charge de roue ou par essieu supérieure de 0,5 % est déterminée pour une pression intérieure de soufflet identique.

2. Procédé selon la revendication 1, dans lequel la modification prenant en compte le vieillissement du soufflet de suspension pneumatique est réalisée sous forme de décalage de la courbe caractéristique de pression (2, 3) compensant le vieillissement.

3. Procédé selon la revendication 1 ou 2, dans lequel les courbes caractéristiques de pression (2, 3) présentant une modification prennent en compte la modification de diamètre du soufflet de suspension pneumatique sur sa durée de fonctionnement.

4. Procédé selon l'une des revendications 1 à 3, dans lequel la détermination de la charge de roue ou par essieu est effectuée à l'aide de courbes caractéristiques de pression (2, 3) présentant une modification à des intervalles de temps ou en fonction d'évènements, en particulier après l'écoulement de périodes de temps prédéfinies, après que le véhicule a atteint des durées de transit prédéfinies ou après des évènements prédéfinis.

5. Procédé selon l'une des revendications 1 à 3, dans lequel la détermination de la charge de roue ou par essieu est effectuée en continu à l'aide de courbes caractéristiques de pression présentant une modification.

6. Procédé selon l'une des revendications 1 à 5, dans lequel la détermination de la charge de roue ou par essieu est effectuée par un algorithme enregistré dans un dispositif de commande électronique de la suspension pneumatique du véhicule et l'algorithme réagit à des signaux de capteurs coopérant avec le dispositif de commande et/ou accède à des contenus de mémoires présentes dans le dispositif de commande, lesquelles contiennent des données pour la description d'une évolution des courbes caractéristiques de pression modifiées, des règles de calcul pour la détermination de la charge de roue ou par essieu ainsi que des données prédéfinies concernant les périodes de temps, les durées de transit ou les évènements.

7. Véhicule à suspension pneumatique, en particulier véhicule utilitaire, en particulier camion ou remorque de camion, comportant un dispositif de régulation de niveau qui présente un dispositif de commande présentant un algorithme pour la mise en œuvre d'un procédé selon les revendications 1 à 6.
